Europäisches Patentamt

European Patent Office

Office européen des brevets

(19)

(11) Publication number: **0 268 840**
**A2**

# EUROPEAN PATENT APPLICATION

(21) Application number: 87115543.8

(22) Date of filing: 23.10.87

(51) Int. Cl.4: **A23L 1/19** , A23G 3/28 ,
A23G 3/00 , A23G 9/02

(30) Priority: **13.11.86 IT 4685586**

(43) Date of publication of application:
**01.06.88 Bulletin 88/22**

(84) Designated Contracting States:
**AT BE CH DE ES FR GB GR LI LU NL SE**

(71) Applicant: **PREGEL S.p.A.**
**via Comparoni, 64**
**I-42100 Gavasseto Reggio Emilia(IT)**

(72) Inventor: **Rabboni, Luciano**
**via Monte Evangelo, 13**
**I-42019 Scandiano (Reggio Emilia)(IT)**

(74) Representative: **Lecce, Giovanni**
**Dott. Giovanni Lecce & C. S.r.l. Via G. Negri**
**10**
**I-20123 Milano(IT)**

(54) **Confectionery product and relevant preparation procedure.**

(57) Soft, light, spoonable confectionery product, composed of a homogeneous mixture of confectioners' sugar, dextrose, maltose, maltodextrins, white of egg in powder, gelatine and flavours, all in powder, whipped with water and mixed with whipped cream, then soaked in alcoholic or non-alcoholic liquid and sponge cake.

The confectionery product obtained can be used to trim other confectionery products.

It can be stored with unaltered characteristics in refrigerators at temperatures below 0°C for various months.

EP 0 268 840 A2

## "CONFECTIONERY PRODUCT AND RELEVANT PREPARATION PROCEDURE"

The present invention refers to a confectionery product and the relevant procedure for its preparation.

More in particular, the present invention refers to a confectionery product of long preservation, of subtle, pleasant taste and soft, light and easy to spread, which maintains intact the abovementioned characteristics even after long preservation at low temperatures (below 0°C).

As noted, the confectionery industry presently produces many products such as desserts, ice-cream cakes and similar, which, while of high quality, present some drawbacks. One of these, found in almost all these products, is that, during storage in refrigerator, they become too hard or freeze.

This problem limits them in the multiple possibilities of use.

Furthermore, in the case of direct use, it is necessary to await their defrosting, which takes place from the exterior towards the interior in fairly long times. Consequently, the structure of the product is altered considerably, ruining its appearance and changing its taste and flavour, depriving the consumer of the full pleasure of taste.

The object of the present invention is to eliminate the abovementioned problems.

According to the present invention, a confectionery product of subtle , pleasant taste, which can be used in many ways and preserved at temperatures over 0°C, maintains intact its cha racteristics of softness, lightness and workability, comprises a homogeneous mixture of confectioners' sugar, dextrose, maltose, maltodextrins, white of egg in powder, gelatine and flavours, all in powdered state.

This mixture can be mixed, immediately or later, with water, then with"whipped cream", and "soaked" in alcoholic or non-alcoholic liquid and sponge cake, or smilar products.

The confectionery product of the present invention can be prepared and sold in the powdered state, or prepared and sold already in the mixed state as specified above; in the latter case, it can be used directly as dessert, ice-cream cake or similar, or indirectly as basic trimming product or in addition to other types of confectionery products.

The components of the confectionery product of the present invention are known products, available on the market and used in the powdered state.

Preparation of the confectionery product takes place by simple mixing of the powders.

The powdered mixture can be sold to the ice-cream and con-confectionery industries, or to confectioners or ice-cream shops.

The mixture obtained with these powder compounds can be mixed with other ingredients, solid and liquid, to form the confectionery product in its final form, which consists in a soft, light, spreadable cream.

The advantages of the confectionery product of the present invention mainly consist in the fact that the product, besides having a subtle, pleasant taste, can be easily used in other ways. For example, it can be used as semi-finished product, i.e. as trimming for other confectionery or ice-cream specialities, or directly distributed to consumers, in cones, cups, tubs etc. Furthermore, the product obtained in this way can be stored in refrigerator or freezers at temperatures below 0°C with constant characteristics of softness, lightness and workability and its length of preservation at temperatures below 0°C and up to -12°C is various months, while, at temperatures above 0°C, it can be stored in refrigerator for five or six days.

The components are homogeneously mixed, in powder state, according to the pre-established formulae, which vary according to the future use of the confectionery product. The quantities of components may vary within wide limits and can generally be:

```
1) Confectioners' sugar  ................up.to 85% in weight;

2) Dextrose  ............................. up to 85% in weight;

3) Maltose  ............................. up to 85% in weight;

4) Maltodextrins  ...................... up to 85% in weight;

5) White of egg in powder ............. 1 to 95% in weight;

6) Gelatine in powder  ................ 0.4 to 10% in weight;
```

7) Flavours ............................. up to 10% in weight.

the sum of the components being 100.

An example of preferred composition, given solely by way of example but not binding, is the following:

| COMPONENTS | % IN WEIGHT |
|---|---|
| 1) Confectioners' sugar | 5.0 |
| 2) Dextrose | 44.0 |
| 3) Maltose | 15.0 |
| 4) Maltodextrins | 21.0 |
| 5) White of egg in powder | 14.5 |
| 6) Gelatine in powder | 0.4 |
| 7) Flavours | 0.1 |

The procedure of combination of the various components takes place by standard mixing and the result is a white smooth, homogeneous powder.

The preparation in powder thus obtained can be used to obtain, through addition of only water and by means of a beater, a whipped, soft product.

The preparation of the sweetening product, starting from the complete preparation in powder, is preferred, even if said product can be obtained with the same result whipping only the white of egg in powder, to which the other components are then added, in particular the abovementioned sweeteners or other similar carbohydrates, and, in a second, subsequent working phase, the other ingredients.

It is therefore evident that the white of egg in powder is an essential element of the formula.

The gelatine has instead a gelifying function, which, although not strictly indispensable, improves the structure of the product.

The other components, the sweeteners in particular, may undergo even high percentage variations according to the future use of the end product. Consequently, for direct consumption in cups, cones or similar, the composition of the product will correspond as much as possible to the optimal one, while, for other applications, such as trimmings and/or decorations of other confectionery products, the percentages of the various sweeteners may undergo considerable variations, or even be nil.

For example, in the case of the presence of only confectioners' sugar, the product is very sweet, while, with the presence of only dextrose, it is of medium and particular sweetness.

With the presence of maltose or maltodextrins, a less sweet product is obtained. It is evident that, according to the confectionery uses and combinations of tastes, the percentage of the abovementioned sweeteners can be suitably varied.

According to the previous table, and, in particular, according to the optimal composition of the components in powder mixed together, the procedure to obtain the confectionery product of the present invention mainly consists in:

-whipping, at high speed for three of four minutes, the powder compound mixed with water;

-whipping separately some cream without sugar;

-preparing some sponge cake, or similar product, in small cubes or pieces and "soaking" them in maraschino or other alcoholic or non-alcoholic liquid;

-mixing the three abovementioned preparations;

-adding to the mixture some flavours, e.g.: zabaglione, macaroon, pistacchio, strawberry, trifle, vanilla, malaga, almond cake, coffe, walnut or other similar product;

-mixing everything together with a spatula.

The preparation thus obtained has an increase in volume of approximately 130%, it is soft, light and mixable; it can be eaten immediately or stored in refrigerator or freezers at the same temperature as ice-cream, without ever becoming hard. An optimal composition of the mixture forming the end product, with possible tolerated minimum or maximum variations, are shown in percentages in the following table:

| COMPONENTS | Preferred % in weight | Min. % in weight | Max. % in weight |
|---|---|---|---|
| a) Basic mixture in powder (according to previous table) | 24.4 | 5 | 60 |

| COMPONENTS | Preferred % in weight | Min. % in weight | Max. % in weight |
|---|---|---|---|
| b) Water | 12.2 | 2 | 70 |
| c) Sponge Cake | 9.8 | 0 | 50 |
| d) Cream | 48.7 | 15 | 80 |
| e) Soaking in non-alcoholic liquid | 4.9 | 0 | 15 |

The sum of the components is 100.

The sponge cake can be substituted with macaroons, chocolate drops or other decorations in general.

The flavours, which may be present in the mixture of the present invention,are as follows: zabaglione, macaroon, pistacchio, strawberry, vanilla, malaga, almond cake, coffee, walnut, chocolate cream, cocoa, trifle etc.

On the basis of the mean values relating to the composition of foods, with a tolerance of approximately ± 5%, the powder mixture comprises approximately 93-94% of dry residues, the sponge cake and similar products approximately 87%, the cream approximately 40% and the liquid base approximately 48%.

Consequently, in the optimal composition, the solids, or dry residue, are approximately 53.2%, and, without the sponge cake or similar, 49.6%.

The sponge cake and liquid base can be optional, even if, in the absence of same, the final percentage is reduced of the dry residue, whose presence is fundamental for the maintenance of the characteristics of lightness and softness of the product.

The dry residue has the basic purpose of slowing down hardening and preventing freezing of the confectionery product obtained with the abovementioned recipe, so that it remains soft, light and spoonable even at temperatures below 0°C and up -12°C inside the product.

A higher or lower percentage of dry residue, with respect to the optimal composition, will produce a consequent variation of the negative temperature limits, with respect to those at which the above characteristics are preserved.

In other words, if the percentage of dry residue drops, the temperature limit will tend towards zero, while, if the percentage rises, the temperature limit will be more negative. The product can be packed in any container and used indifferently in confectioners and ice-cream shops and/or in large confectionery and ice-cream industries.

It can be used for immediate consumption in cones, cups, tubs and similar, as dessert or ice-cream cake, or as trimming for other confectionery specialities, in confectioners and ice-cream shops.

The length of storage of the product is various months at temperatures below 0°C, while, at temperatures above 0°C, it is limited, due to the presence of cream and its capacity to increase bacteria.

By way of example, finally, we show below the recipe for a small tank with a volume of approximately 5 litres:

```
- Basic mixture in powder, according to

  the formula shown in the first table:          500 g

  - Water:                                        250 g

  - Sponge Cake cut into small cubes              200 g

  - Liquid base:                                  100 g

  - Unsugared whipped cream:                      1000g

  - Flavours (as required):                    50-200 g
```

**Claims**

1) Confectionery product characterized by the fact of comprising a homogeneous mixture of cofectioners' sugar, dextrose, maltose, maltodextrins, white of egg in powder, gelatine and flavours, all in powder state.

2) Confectionery product according to claim 1, characterized by the fact that the homogeneous mixture is mixed with water, whipped cream, alcoholic or non-alcoholic base, sponge cake or similar products.

3) Confectionery product to claim 1, characterized by the fact that it comprises:
-confectioners' sugar     up to 85% in weight;
-dextrose:      up to 85% in weight;
-maltose:      up to 85% in weight;
-maltodextrins:      up to 85% in weight;
-white of egg:      1 to 95% in weight;
-gelatine:      0.4 to 10% in weight;
-flavours:      up to 10% in weight;
the sum of the components being 100.

4) Confectionery product according to claim 3, characterized by the fact that it comprises:
5% of confectioners' sugar;
44% of dextrose;
15% of maltose;
21% of maltodextrins;
14.5% of white of egg in powder;
0.4% of gelatine and
0.1% of flavours.

5) Confectionery product according to claim 2, characterized by the fact that it comprises:

5

- homogeneous mixture according to

   claim 3:                             5 to 60% in weight;

- water:                                 2 to 70% in weight;

- sponge cake:                        0 to 50% in weight;

- cream:                               15 to 80% in weight;

- liquid base:                        0 to 15% in weight

the sum being equal to 100.

6) Confectionery product according to claim 5, characterized by the fact that it comprises:

- homogenecus mixture according to

   claim 3:                          24.4% in weight;

- water:                               12.2% in weight;

- sponge cake:                     9.8% in weight;

- cream:                             48.7% in weight;

- liquid base:                    4.9% in weight.

7) Confectionery product according to any of the previous claims, characterized by the fact that the percentage of dry residues is between 49.6 and 53.2% in weight.

8) Confectionery product according to any of the previous claims, characterized by the fact that the sponge cake is substituted with macaroons or chocolate drops and the flavouring is chosen among zabaglione, macaroon, pistacchio, strawberry, trifle,vanilla, malaga, almond cake, coffee, walnut, chocolate cream and cocoa.

9) Procedure for the preparation of the confectionery product indicated in the previous claims, comprising the following phases:

a) whipping, at high speed for three or four minutes, of the mixture in powder mixed with water;

b) separate whipping of the cream without sugar;

c) preparation of the sponge cake, or other similar product, in small cubes or pieces and "soaking" it in maraschino or other liqueur;

d) mixing the three abovementioned preparations a-c;

e) adding a flavouring product to the mixture;

f) mixing all ingredients together with a apatula.

10) Confectionery product according to any of the previous claims 1 to 8, packed in cones, cups and tubs or used for trimmings and decorations in the confectionery and ice-cream industries.